# EUROPÄISCHE PATENTSCHRIFT

(11) **EP 3 623 694 B1**
(45) Veröffentlichungstag und Bekanntmachung des Hinweises auf die Patenterteilung: **12.01.2022**
(21) Anmeldenummer: 19203183.9
(22) Anmeldetag: 13.02.2018
(51) Int. Cl.: F21V 13/02, F21V 8/00, F21K 9/61, G02B 27/09, F21Y 115/10

(54) **LEUCHTE SOWIE VERFAHREN ZUR STEUERUNG DER ABSTRAHLCHARAKTERISTIK DERSELBEN UND LICHTMISCHLEITER UND LEUCHTE MIT LICHTMISCHLEITER**
LIGHT AND METHOD FOR CONTROLLING THE BEAM CHARACTERISTIC OF SAME AND LIGHT MIXING CONDUCTOR AND LIGHT WITH LIGHT MIXING CONDUCTORS
LUMINAIRE AINSI QUE PROCÉDÉ DE COMMANDE DES CARACTÉRISTIQUES DU RAYONNEMENT DUDIT LUMINAIRE, CONDUIT DE MÉLANGEUR DE LUMIÈRE ET LUMINAIRE POURVU DE CONDUIT DE MÉLANGEUR DE LUMIÈRE

(30) Priorität: 14.02.2017 DE 102017202277; 03.08.2017 DE 102017213462; 03.08.2017 DE 102017213466; 03.08.2017 DE 102017213488; 18.08.2017 DE 102017214395; 20.12.2017 DE 202017107771 U
(43) Veröffentlichungstag der Anmeldung: 18.03.2020
(62) Teilanmeldung aus: 18706682.4
(73) Patentinhaber: Zumtobel Lighting GmbH, 6850 Dornbirn (AT)
(72) Erfinder: Ebner, Stephan, 6850 Dornbirn (DE); Gassner, Patrik, 6722 St. Gerold (AT); Wimmer, Rebecca, 6932 Langen Bei Bregenz (AT)
(74) Vertreter: Kiwit, Benedikt

(56) Entgegenhaltungen:
- EP-A1- 1 688 779
- WO-A1-2009/029544
- WO-A1-2013/114259
- DE-T2- 60 201 617
- US-A1- 2007 153 240
- US-A1- 2015 167 913
- US-B1- 6 272 269

## Beschreibung

Die vorliegende Erfindung betrifft einen Lichtmischleiter mit einer Längsachse aufweisend einen Lichtmischleiterkörper, welcher sich axial zwischen einer Lichteingangsseite und einer Lichtausgangsseite erstreckt.

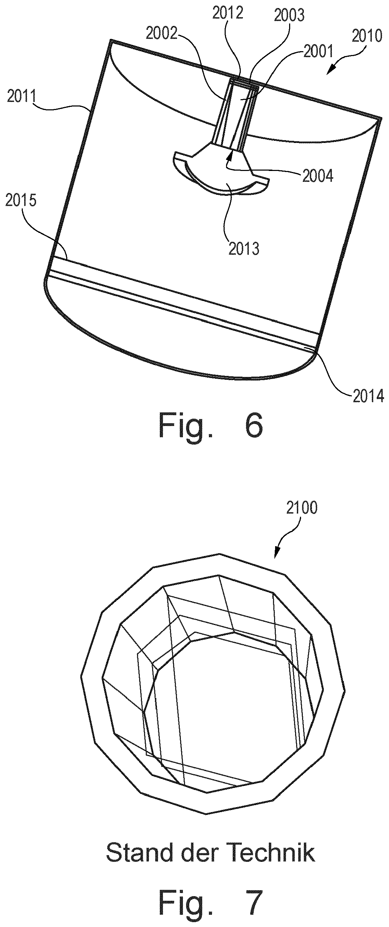

Lichtmischleiter der eingangs genannten Art sind aus dem Stand der Technik bekannt. Klassischerweise weist ein solcher Lichtmischleiter eine definierte Form an seiner Lichteingangsseite auf, welche im Grunde der definierten geometrischen Form an der Lichtausgangsseite entspricht. Meist sind solche Lichtmischleiter translationsinvariant entlang deren Längsachse ausgebildet. Ein solcher Lichtmischleiter 100 ist in Figur 7 dargestellt. Es ist beispielsweise auch denkbar, dass ein solcher bekannter Lichtmischleiter beispielsweise konisch ausgebildet ist, sodass sich die Formen der Lichteingangsseite und der Lichtausgangsseite zwar entsprechen, diese jedoch in einem anderen Größenverhältnis zueinander ausgebildet sind.

Solche Lichtmischleiter können beispielsweise als Vollkörper bereitgestellt sein. Bei der Verwendung von LEDs als Leuchtmittel, welches den Lichtmischleiter als optisches Element zur Lichtmischung und Lichtabgabe nutzt, findet meist keine optimale Durchmischung des Lichtes statt. Dies insbesondere dann, wenn die einzelnen LEDs bzw. deren unterschiedliche Lichtfarben asymmetrisch auf einem LED-Modul als Leuchtmittel platziert sind.

WO 2009/029544, DE 602 01617 T2 und US 2015/167913 offenbaren Lichtmischleiter des Stands der Technik. Somit offenbart DE 602 01617 T2 ein Lichtleitelement mit einem Lichtleitabschnitt, welcher sich zwischen einer Lichteintrittsfläche zum Einkoppeln von Licht und einer Lichtaustrittsfläche zum Auskoppeln von Licht hindurch erstreckt, wobei die Lichtaustrittsfläche sich entlang einer Austrittsflächenlängsrichtung erstreckend ausgebildet ist, und wobei der Lichtleitabschnitt wenigstens eine erste und eine zweite sich in Richtung von der Lichteintrittsfläche zur Lichtaustrittsfläche erstreckende Seitenfläche aufweist, und die Lichteintrittsfläche eine polygone Form aufweist, die sich von der polygonen Form der Lichtaustrittsfläche unterscheidet, und wobei die polygone Form der Lichteintrittsfläche mehrere Ecken als die polygone Form der Lichtaustrittsfläche aufweist.

Des Weiteren sind aus dem Stand der Technik Lichtmischleiter als Hohlkörper bekannt. Diese sind in der Regel aus einem hochreflektierenden aber in einem weiten Winkelbereich streuenden Material, wie z.B. MCPET, hergestellt. Nachteilig an solchen Lichtmischleitern ist deren geringere Effizienz gegenüber den erstgenannten Lichtmischleitern als Vollkörper, die das Licht mittels Totalreflexion durch den Lichtmischleiter lenken, da bei diesen verhältnismäßig viel Licht zurückgestreut wird. Des Weiteren sind sogenannte chaotische Mischstäbe mit zum Teil gekrümmten Flächen in regelmäßiger oder unregelmäßiger Anordnung bekannt. Bei derartigen Lichtmischleitern funktioniert die interne Totalreflexion nur noch teilweise, da der Grenzwinkel stellenweise nicht mehr eingehalten wird. Dadurch kommt es zu Auskoppelverlusten. Als Hohlmischstäbe sind solche Geometrien quasi nicht herstellbar; insbesondere nicht aus einem Hochglanzmaterial mit einem hohen Reflexionsgrad (> 96%) und nur sehr geringer Streuung.

Es ist somit auch eine Aufgabe der vorliegenden Erfindung, einen Lichtmischleiter sowie eine damit ausgestattetet Leuchte bereitzustellen, welche sowohl eine gute Lichtdurchmischung als auch eine hohe Leuchteneffizienz ermöglichen.

Die Erfindung ist ein Lichtmischleiter gemäß Anspruch 1.

Indem, anders als im Stand der Technik, nicht nur die Dimensionen, sondern insbesondere die Form der Lichteingangsseite sich von der Lichtausgangsseite unterscheidet, während darüber hinaus die Sektoroberflächen als flächige Ebenen ausgebildet sind, ändert sich der Querschnitt des Lichmischleiters in axialer Richtung gesehen ständig, so dass sich unterschiedliche Flächengeometrien bzw. Flächenformen in axialer Richtung gesehen abwechseln. Folglich kann das Licht in einer unregelmäßigeren und fast schon chaotischen Bahn durch den Lichtmischleiter gelenkt und somit im Vergleich zu bekannten Lichtmischleitern deutlich besser durchmischt werden. Somit wird sowohl eine gute Durchmischung des Lichtes als auch eine effiziente Weiterleitung desselben ermöglicht.

Die erste polygone Form kann im Wesentlichen eine rechteckige oder quadratische Vieleckform oder Grundform aufweisen. Diese Ausgestaltung wird insbesondere den üblicherweise bereitgestellten Leuchtmitteln gerecht. LEDs, CSP-LEDs oder auch nur LED-Chips selbst weisen typischerweise eine rechteckige oder quadratische Grundform auf. Dadurch weisen auch die kompaktesten Arrays, die aus solchen Lichtquellen bestehen, eine im Wesentlichen rechteckige oder quadratische Grundform auf. Da die Lichteingangsseite des Lichtleiters in dieser speziellen Ausgestaltungsform ebenso eine rechteckige bzw. quadratische Grundform aufweist, sind speziell mit solchen Lichtquellenarrays sehr kompakte optische System möglich, was speziell für den Öffnungswinkel von Spot- oder Superspotoptiken ein entscheidender Vorteil ist. In solchen Systemen zählt vor allem, je kleiner die Lichtquelle bzw. die virtuelle Lichtquelle (also der Lichtleiterausgang) ist, desto kleiner kann auch das optische System sein und/oder desto kleinere Öffnungswinkel der Abstrahlcharakteristik können realisiert werden.

Als Vieleckform wird im Rahmen der vorliegenden Anmeldung definitionsgemäß eine Form mit einer definierten Anzahl an Ecken verstanden; also eine (ebene) geometrische Figur, die durch einen geschlossenen Streckenzug gebildet und/oder begrenzt wird. Als Grundform wird im Rahmen der vorliegenden Anmeldung verstanden, dass die Form im Wesentlichen einem Vieleck entspricht - also bspw. rechteckig oder quadratisch ausgebildet ist - jedoch einige der Ecken beispielsweise durch mehrere kurze, geradlinige Seitenkanten wie quasi abgerundet ausgebildet sind, sodass sich im Großen und Ganzen eine im Wesentlichen vieleckige Grundform ergibt, welche faktisch eine der Anzahl der Ecken der Grundform übersteigende Anzahl an Ecken aufweist.

Die zweite polygone Form weist im Wesentlichen eine quasi runde Vieleckform oder Grundform auf. Die spezielle Geometrie eines solchen Lichtmischleiters überführt somit die polygone Form der Lichteingangsseite in eine quasi runde Vieleckform (d.h. ein Zwölfeck oder mehr). Der quasi runde Lichtausgang des Lichtmischleiters eignet sich daher für Beleuchtungsoptiken, die abbildungsnah funktionieren. Das Licht an der Lichtausgangsseite des Lichtmischleiters ist aufgrund der Geometrie des Lichtmischleiters gut durchmischt und kommt somit aus einer quasi runden Lichtausgangsfläche bzw. Lichtausgangsseite. Das Abbild des Lichtleiterausgangs weist dann dementsprechend ähnliche Eigenschaften auf und ist somit quasi rund und besonders homogen in der Farbverteilung.

Die erste polygone Form weist weniger Ecken auf als die zweite polygone Form. So kann beispielsweise die erste polygone Form eine rechteckige bzw. quadratische Grundgeometrie aufweisen, während die zweite polygone Form beispielsweise die vorbeschriebene quasi runde Vieleckform oder auch eine andere Form aufweist. Somit kann einerseits den Anforderungen auf der Lichteingangsseite (beispielsweise aufgrund einer entsprechenden Geometrie des Leuchtmittels) entsprochen und andererseits eine davon unabhängig optimierte Lichtabgabecharakteristik auf der Lichtausgangsseite ermöglicht werden, welche beispielsweise der Lichtausgangsseite eines klassischen Lichtmischleiters entspricht.

Die erste und/oder zweite polygone Form kann zyklisch symmetrisch ausgebildet sein; also insbesondere als gleichförmiges Polygon (wie beispielsweise ein gleichförmiges Zwölfeck). Die erste und/oder zweite polygone Form kann des Weiteren ein einfaches und bevorzugt konvexes Polygon sein. Ebenso kann die erste und/oder zweite polygone Form ein planares Polygon sein, dessen Erstreckungsebene sich bevorzugt senkrecht zur Längsachse erstreckt. Die erste und/oder zweite polygone Form kann darüber hinaus ein gleichseitiges, gleichwinkliges oder regelmäßiges Polygon sein. Auf diese Weise ist es möglich, die Lichteingangsseite und die Lichtausgangsseite unabhängig voneinander in beliebiger Weise auszugestalten, um den Lichteinkopplungsanforderungen einerseits sowie den Lichtauskopplungsanforderungen bzw. der Lichtabgabecharakteristik andererseits durch individuelle Einstellung gerecht zu werden.

Die Erstreckungsebenen wenigstens eines Teils der Sektoroberflächen erstrecken sich parallel zu der Längsachse. In Verbindung mit den sich unterscheidenden polygonen Formen auf der Lichteingangsseite und der Lichtausgangsseite und der sich so ergebenden unterscheidenden Sektoroberflächen kann eine besonders gute Lichtdurchmischung ermöglicht werden.

Des Weiteren ist es möglich, das die Erstreckungsebenen wenigstens eines Teil der Sektoroberflächen zu der Längsachse geneigt sind, vorzugweise mit zunehmenden Abstand zur Längsachse von der Lichteingangsseite zu der Lichtausgangsseite hin. Somit ergeben sich teils konisch angeordnete Sektoroberflächen, die das Licht schneller durch den Lichtmischleiter lenken. Auf diese Weise kommt es zu weniger, aber weiterhin unregelmäßigen Interaktionen mit den Sektoroberflächen des Lichtmischleiters. Dies führt insbesondere bei hohlen Lichtmischleitern aus einem hochreflektiven Material zur Reduzierung möglicher materialbedingter Absorptionsverluste einerseits sowie zur Steigerung der Effizienz des Systems andererseits.

Wie zuvor bereits beschrieben kann der Lichtmischleiter aus einem Vollkörper bereitgestellt sein, sodass der Lichtmischleiterkörper durch eine die Längsachse umgebende Außenoberfläche begrenzt ist. Bei Lichteinkopplung auf der Lichteingangsseite kann somit beispielsweise das Licht durch Totalreflexion durch den Lichtmischleiter gelenkt werden und aufgrund der speziellen Geometrie des Lichtmischleiters eine besonders gute Durchmischung des Lichts und insgesamt eine hohe Effizienz des Systems erzielt werden.

In einer alternativen Ausgestaltungsform ist es denkbar, dass der Lichtmischleiter aus einem Hohlkörper bereitgestellt ist, sodass der Lichtmischleiterkörper durch eine die Längsachse umgebende Innenoberfläche sowie eine die Längsachse und die Innenoberfläche umgebende Außenoberfläche begrenzt ist. Der Lichtmischleiter ist folglich quasi rohrförmig ausgebildet.

Die Sektoroberflächen sowohl des als Vollkörper als auch des als Hohlkörper ausgebildeten Lichtmischleiters können sich auf der Außenoberfläche des Lichtmischleiterkörpers erstrecken. Im Falle des als Hohlkörper ausgebildeten Lichtmischleiters ist es alternativ oder ergänzend denkbar, dass sich die Sektoroberflächen auf der Innenoberfläche des Lichtmischleiters erstrecken. Im letztgenannten Fall kann die Innenoberfläche reflektierend und bevorzugt verspiegelt ausgebildet sein, vorzugweise mit einem Reflektor oder einer reflektierenden Beschichtung versehen sein. Insbesondere in dem Fall des Lichtmischleiters als Vollkörper oder auch als Hohlkörper, bei dem sich die Sektoroberflächen insbesondere auf der Außenoberfläche des Lichtmischleiterkörpers erstrecken, kann die Außenoberfläche reflektierend und bevorzugt verspiegelt ausgebildet sein, vorzugweise mit einem Reflektor oder einer reflektierenden Beschichtung versehen sein. Durch den als Hohlkörper ausgebildeten Lichtmischleiter kann somit eine gewünschte Reflexion des Lichtes und somit eine gute Durchmischung des Lichtes in dem Lichtmischleiter erzielt werden. Im Fall eines Vollkörpers können durch die reflektierend ausgebildete Außenoberfläche Streueffekte aufgrund nicht optimaler Totalreflexion des Lichtmischleiters vermieden werden, indem eventuelles Streulicht in den Lichtmischleiter zurückgeführt wird. Auch kann die Außenoberfläche beim Vollkörper-Lichtmischleiter gänzlich als Reflektor ausgebildet sein, sollte die Geometrie der Sektoroberflächen nicht oder nur eine unzureichende Totalreflexion zulassen. Somit wird insgesamt die Effektivität des Lichtmischleiters erhöht.

Der als Hohlkörper bereitgestellte Lichtmischleiter kann in einer besonders bevorzugten Ausgestaltungsform aus einem reflektierenden Material, wie beispielsweise Aluminium, hergestellt sein. Alternativ können der als Hohlkörper bereitgestellte Lichtmischleiter sowie auch der als Vollkörper bereitgestellte Lichtmischleiter aus einem transparenten Material, wie Glas oder Kunststoff hergestellt sein. Insbesondere im Fall des als Hohlkörper ausgebildeten Lichtmischleiters wäre dann eine reflektierende Ausgestaltung der zur Lichtumlenkung definierten Sektoroberflächen auf der Außenoberfläche bzw. der Innenoberfläche bevorzugt.

Gemäß einem weiteren Aspekt betrifft die vorliegende Erfindung ferner eine Leuchte mit einem Lichtmischleiter gemäß der vorliegenden Erfindung sowie einem Leuchtmittel bzw. einer Lichtquelle, wie eine oder mehrere LEDs (beispielsweise in Form eines LED-Moduls oder eines LED-Arrays), zur Lichteinkopplung in den Lichtmischleiter über dessen Lichteingangsseite. Des Weiteren kann die Leuchte bevorzugt ferner eine dem Lichtmischleiter nachgelagerte Voroptik zur definierten Lichtlenkung des über die Lichtausgangsseite des Lichtmischleiters abgegeben Lichtes aufweisen. Darüber hinaus kann die Leuchte ferner eine der Voroptiken nachgelagerte Auskoppeloptik zur definierten Lichtabgabe des von der Voroptik abgegebenen Lichts aufweisen. Bevorzugt weist die Leuchte ferner eine zwischen der Voroptik sowie der Auskoppeloptik angeordnete Streuoptik zur Beeinflussung des von der Voroptik abgegebenen Lichtes auf. Auf diese Weise kann ein optisches System geschaffen werden, welches eine besonders hohe Effizienz einerseits sowie eine gute Lichtdurchmischung andererseits ermöglicht. Auf diese Weise können unerwünschte Abbildungen der Lichtquellen oder aufgrund mangelnder Lichtdurchmischung vermieden und somit eine insgesamt besonders homogene Lichtabgabecharakteristik erzielt werden.

Weitere Ausgestaltungen und Vorteile der vorliegenden Erfindung werden anhand der begleitenden Figuren der folgenden Zeichnungen beschrieben. Es zeigen:
- Figur 1: eine perspektivische Ansicht eines nicht-erfindungsgemäßen Lichtmischleiters,
- Figur 2: eine perspektivische Ansicht eines nicht-erfindungsgemäßen Lichtmischleiters,
- Figur 3: eine andere perspektivische Ansicht des Lichtmischleiters gemäß Figur 2 mit beispielhafter Darstellung der Lichtreflexion eines Lichtstrahls,
- Figur 4: eine Draufsicht auf den Lichtmischleiter in Richtung der Längsachse in Pfeilrichtung IV gemäß Figur 2 gesehen,
- Figur 5: eine Draufsicht auf den Lichtmischleiter in Richtung der Längsachse in Pfeilrichtung V gemäß Figur 2 gesehen,
- Figur 6: eine perspektivische Schnittansicht einer nicht-erfindungsgemäßen Leuchte mit einem Lichtmischleiter gemäß Figur 1 oder Figur 2,
- Figur 7: eine perspektivische Ansicht eines Lichtmischeiters gemäß dem Stand der Technik mit beispielhafter Darstellung der Lichtreflexion eines Lichtstrahls.

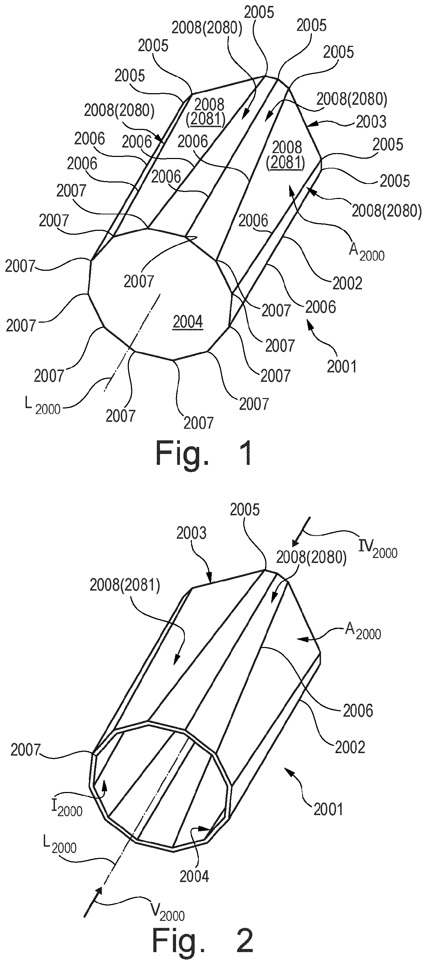

Die Figur 1 einerseits und die Figuren 2 bis 5 andererseits zeigen zwei unterschiedliche Ausführungsformen eines Lichtmischleiters 2001 ähnlich eines solchen gemäß der vorliegenden Erfindung. Die Lichtmischleiter 1 weisen jeweils eine Längsachse L₂₀₀₀ auf. Entlang dieser Längsachse L₂₀₀₀ erstreckt sich der Lichtmischleiter 2001. Der Lichtmischleiter 2001 weist einen Lichtmischleiterkörper 2002 auf, welcher sich axial zwischen einer Lichteingangsseite 2003 mit einer ersten polygonen Form zum Einkoppeln von Licht einer Lichtquelle 2012 in den Lichtmischleiter 2001 und einer Lichtausgangsseite 2004 mit einer zweiten polygonen Form zur Abgabe des über die Lichteingangsseite 2003 eingekoppelten Lichts erstreckt. Wie den Figuren zu entnehmen ist, unterscheidet sich die erste polygone Form von der zweiten polygonen Form.

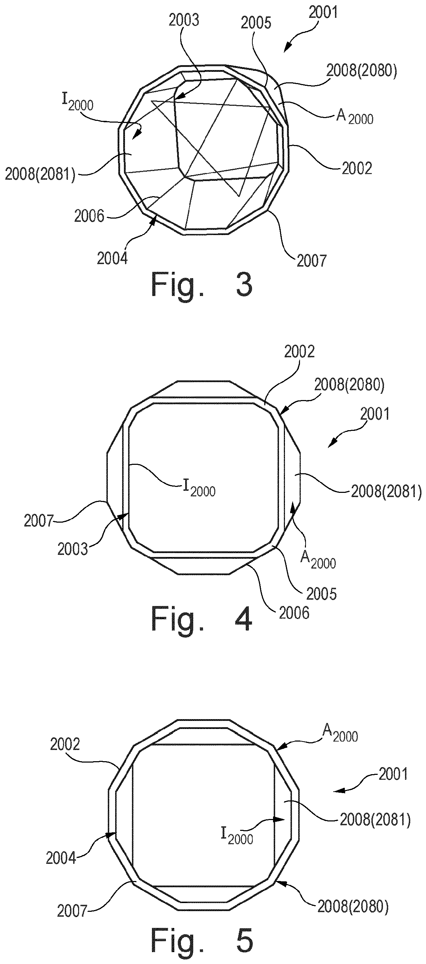

Wie dargestellt, kann in einer bevorzugten Ausgestaltungsform die erste polygone Form im Wesentlichen eine rechteckige oder quadratische Vieleckform oder Grundform aufweisen. Beispielsweise mit Verweis auf die Figur 4 ergibt sich bei dem dargestellten Ausführungsbeispiel auf der Lichteingangsseite 2003 eine quadratische Grundform. Diese quadratische Grundform ist gebildet aus einer Zwölfeckform, wobei jeweils vier besonders lang ausgebildete Seiten durch jeweils zwei kurz ausgebildete Seiten verbunden sind. Es ist jedoch auch denkbar, dass beispielsweise die erste polygone Form tatsächlich rechteckig oder quadratisch ausgebildet ist und somit vier Ecken und vier Seiten aufweist. Die erste polygone Form kann auch ein beliebiges anderes Vieleck sein. Die rechteckige bzw. quadratische Form ist jedoch bevorzugt, da insbesondere entsprechende Leuchtmittelanordnungen (beispielsweise LED-Arrays) in der Regel eine rechteckige (Grund-)Form aufweisen und somit eine effektive Lichteinkopplung auf der Lichteingangsseite 2003 ermöglicht werden kann.

Wie insbesondere der Figur 5 zu entnehmen ist, weist die zweite polygone Form im Wesentlichen eine quasi runde Vieleckform oder Grundform auf. Wie dargestellt ist dies beispielsweise eine Zwölfeckform, die aufgrund ihrer vergleichsweisen großen Anzahl an Ecken 2007 und Seiten eine im Wesentlichen runde Form - also eine quasi runde Form - bildet. Die zweite polygone Form kann auch ein beliebiges anderes Vieleck sein. Somit kann eine definierte und den Anforderungen entsprechend optimierte Lichtausgangsseite 2004 bereitgestellt werden.

In dem hier dargestellten nicht-erfindungsgemäßen Beispiel weist die erste polygene Form genauso viele Ecken 2005 auf, wie die zweite polygone Form. Erfindungsgemäß weist die erste polygone Form jedoch faktisch weniger Ecken 2005 auf als die zweite polygone Form. Beide sind hier als Zwölfeck ausgebildet, weisen jedoch eine andere Form auf. Die erste polygone Form auf der Lichteingangsseite 2003 ist hier als quasi quadratischen Grundform ausgebildet, während die zweite polygone Form der Lichtausgangsseite 2004 eine quasi runde Zwölfeckform aufweist.

Die erste und/oder zweite polygone Form können zyklisch symmetrisch ausgebildet sein, wie dies in den Figuren dargestellt ist. Die erste und/oder zweite polygone Form können ferner ein einfaches und bevorzugt konvexes Polygon sein, wie dies in den Figuren dargestellt ist. Die erste und/oder zweite polyene Form kann ein planares Polygon sein, dessen Erstreckungsebene sich bevorzugt senkrecht zur Längsachse L₂₀₀₀ erstreckt, wie in den Figuren dargestellt. Die erste und/oder zweite polygone Form kann des Weiteren ein gleichseitiges, gleichwinkliges oder regelmäßiges Polygon sein. Letzteres ergibt sich insbesondere in dem dargestellten Ausführungsbeispiel für die zweite polygone Form (vgl. Figur 5). Die erste polygone Form ist hier als gleichwinkliges Polygon ausgebildet (vgl. Figur 4).

Jede Ecke 2005 der ersten polygonen Form der Lichteingangsseite 2003 ist geradlinig in Form einer Längskante 2006 des Lichtmischleiterkörpers 2002 mit einer Ecke 2007 der zweiten polygonen Form der Lichtausgangsseite 2004 verbunden und umgekehrt ist jede Ecke 2007 der zweiten polygonen Form der Lichtausgangsseite 2004 geradlinig in Form einer Längskante 2006 des Lichtmischleiterkörpers 2002 mit einer Ecke 2005 der ersten polygonen Form der Lichteingangsseite 2003 verbunden, sodass die Längskanten 2006 sich nicht schneiden. Die zwischen zwei benachbarten Längskanten 2006 aufgespannten Sektoroberflächen 2008 des Lichtmischleiterkörpers 2002 erstrecken sich jeweils in einer Erstreckungsebene flächig. Auf diese Weise ergibt sich aufgrund der unterschiedlich je Translationsebene entlang der Längsachse ergebenden Querschnittsform des Lichtmischleiters 2001 bzw. Lichtmischleiterkörpers 2002 unterschiedlich angeordnete, ausgebildete und ausgerichtete Reflexionsflächen. Somit ergibt sich die beispielsweise in Figur 3 dargestellte unregelmäßige und fast schon chaotische Bahn der Lichtführung durch den Lichtmischleiter 2001, was zu einer besonders homogenen Durchmischung führt. Mit Blick auf Figur 3, bei der man in den Lichtmischleiter 1001 hineinschauen kann, ist die sich in diesem Beispiel für einen Lichtstrahl ergebende Vielzahl unregelmäßiger Spiegelungen der Lichtquelle (beispielsweise LED-Array) zu erkennen, welche zum großen Teil auch noch unvollständig bzw. beschnitten sind.

Die Erstreckungsebenen wenigstens eines Teils der Sektoroberflächen und somit die Sektoroberflächen 2008 selbst erstrecken sich parallel zu der Längsachse L₂₀₀₀. Dies ergibt sich beispielsweise für die insbesondere in der Figur 4 ersichtlichen schmalen Sektoroberflächen 2080.

Darüber hinaus ist es auch denkbar, dass die Erstreckungsebenen wenigstens eines Teils der Sektoroberflächen 2008 und somit die Sektoroberflächen 2008 selbst zur Längsachse L₂₀₀₀ geneigt sind, wie dies beispielsweise in der Figur 5 deutlich für die breiteren Sektoroberflächen 2081 zu erkennen ist. Vorzugweise sind die Sektoroberflächen 2008, 2081 derart geneigt, dass sie einen zunehmenden Abstand zur Längsachse L₂₀₀₀ von der Lichteingangsseite 2003 zu der Lichtausgangsseite 2004 hin haben. Auf dieser Weise ergibt sich eine teilweise konisch aufweitende Form des Lichtmischleiters 2001, was wiederum eine besonders homogene Lichtdurchmischung zur Folge hat.

Wie Figur 1 zu entnehmen ist, kann der Lichtmischleiter 2001 aus einem Vollkörper bereitgestellt sein, sodass der Lichtmischleiterkörper 2002 durch eine die Längsachse L₂₀₀₀ umgebende Außenoberfläche A₂₀₀₀ begrenzt ist. Figur 2 zeigt hierzu alternativ ein Ausführungsbeispiel, bei dem der Lichtmischleiter 2001 aus einem Hohlkörper bereitgestellt ist, sodass der Lichtmischleiterkörper 2002 durch eine die Längsachse L₂₀₀₀ umgebende Innenoberfläche I₂₀₀₀ sowie eine die Längsachse L₂₀₀₀ und die Innenoberfläch I₂₀₀₀ umgebende Außenoberfläche A₂₀₀₀ begrenzt ist.

Auf diese Weise ist es möglich, Lichtmischleiter 2001 sowohl als Vollkörper als auch als Hohlkörper bereitzustellen, um entsprechenden Anforderungen an die Lichtmischleitercharakteristik gerecht zu werden.

Wie insbesondere der Figur 1 zu entnehmen ist, können sich die Sektoroberflächen 2008 auf der Außenoberfläche A₂₀₀₀ des Lichtmischleiterkörpers 2002 erstrecken. Dasselbe gilt im Wesentlichen auch für die Ausgestaltungsform der Figur 2. Bei dieser ergibt es sich (alternativ oder ergänzend), dass sich die Sektoroberflächen 2008 (auch) auf der Innenoberfläche I₂₀₀₀ des Lichtmischleiterkörpers 2002 erstrecken. Letzteres ergibt sich insbesondere in dem Fall, in dem der als Hohlkörper bereitgestellte Lichtmischleiter 2001 aus einem reflektierenden Material, wie beispielsweise Aluminium, hergestellt ist. Alternativ oder ergänzend ist es denkbar, dass die Innenoberfläche I₂₀₀₀ reflektierend und bevorzugt verspiegelt ausgebildet und vorzugweise mit einem Reflektor oder einer reflektierenden Beschichtung versehen ist.

Darüber hinaus ist es gemäß dem Ausführungsbeispiel der Figur 1 oder auch der Figur 2 denkbar, dass die Außenoberfläche A₂₀₀₀ reflektierend und bevorzugt verspiegelt ausgebildet und vorzugsweise mit einem Reflektor oder einer reflektierenden Beschichtung versehen ist. Gemäß dem Ausführungsbeispiel der Figur 1 kann dies von Vorteil sein, um beispielsweise ungewünschte Streueffekte des Lichtmischleiters zu vermeiden und eine eventuell durch nicht optimale Totalreflexion erzeugte Streuung des Lichts wieder zurück in den Lichtmischleiter 2001 zu führen.

Der Lichtmischleiter 2001 kann des Weiteren aus einem transparenten Material, wie Glas oder Kunststoff, hergestellt sein. Im Falle des Lichtmischleiters 1 als Vollkörper sind dann die Sektoroberflächen derart zueinander anzuordnen, dass möglichst das in den Lichtmischleiter 2001 eingeführte Licht mittels Totalreflexion an den Sektoroberflächen 2008 reflektiert wird. Ergänzend kann die Außenoberfläche A₂₀₀₀ reflektierend ausgebildet sein, wie zuvor beschrieben. Im Falle des Lichtmischleiters 2001 als Hohlkörper und aus einem transparenten Material hergestellt ist es bevorzugt, dass die zur Reflexion dienende Oberfläche, also die Außenoberfläche A₂₀₀₀ oder, wie in Figur 3 dargestellt, die Innenoberfläche I₂₀₀₀, reflektierend ausgebildet ist.

Figur 6 zeigt des Weiteren eine Leuchte 2010 unter Verwendung eines Lichtmischleiters 2001. Der Lichtmischleiter 2001 ist dabei in einem Leuchtengehäuse 2011 aufgenommen. Des Weiteren weist die Leuchte 2010 eine Lichtquelle 2012 zur Lichteinkopplung in den Lichtmischleiter 2001 über dessen Lichteingangsseite 2003. Die Lichtquelle 2012 kann, wie hier dargestellt, eine oder mehrere LEDs (letzteres beispielsweise in Form eines LED-Arrays) aufweisen.

In dem hier dargestellten Ausführungsbeispiel weist die Leuchte 2010 des Weiteren eine dem Lichtmischleiter 2001 nachgelagerte Voroptik 2013 zur definierten Lichtlenkung des über die Lichtausgangsseite 2004 des Lichtmischleiters 2001 abgegebenen Lichts. Des Weiteren weist die Leuchte 2010 eine der Voroptik 2013 nachgelagerte Auskoppeloptik 2014 zur definierten Lichtabgabe des von der Voroptik 2013 abgegebenen Lichts. Zwischen der Voroptik 2013 sowie der Auskoppeloptik 2014 kann des Weiteren eine Streuoptik 2015 vorgesehen sein, um das Licht entsprechend optisch zu beeinflussen. Die Streuoptik 2015 kann beispielsweise an der Lichteingangsseite (also der der Voroptik 2013 zugewandten Seite) der Auskoppeloptik 2014 vorgesehen und bevorzugt mit dieser integral ausgebildet sein; bspw. als Oberflächenstruktur. Es ist jedoch auch denkbar, dass die Streuoptik 2015 als separates Element zwischen der Voroptik 2013 und der Auskoppeloptik 2014 vorgesehen ist.

Die vorliegende Erfindung ist auf die vorhergehenden Ausführungsbeispiele nicht beschränkt, sofern sie vom Gegenstand der vorliegenden Ansprüche umfasst werden.

Insbesondere können die Merkmale der unterschiedlichen Ausführungsformen in beliebiger Weise mit- und untereinander kombiniert und ausgetauscht werden.

## Patentansprüche

1. Lichtmischleiter (2001) mit einer Längsachse (L₂₀₀₀), aufweisend einen Lichtmischleiterkörper (2002), welcher sich axial zwischen einer Lichteingangsseite (2003) mit einer ersten polygonen Form zum Einkoppeln von Licht einer Lichtquelle (2012) in den Lichtmischleiter (2001) und einer Lichtausgangsseite (2004) mit einer zweiten polygonen Form zur Abgabe des über die Lichteingangsseite (2003) eingekoppelten Lichts erstreckt,
wobei sich die erste polygone Form von der zweiten polygonen Form unterscheidet, und
wobei jede Ecke (2005) der ersten polygonen Form der Lichteingangsseite (2003) geradlinig in Form einer Längskante (2006) des Lichtmischleiterkörpers (2002) mit einer Ecke (2007) der zweiten polygonen Form der Lichtausgangsseite (2004) verbunden ist und umgekehrt jede Ecke (2007) der zweiten polygonen Form der Lichtausgangsseite (2004) geradlinig in Form einer Längskante (2006) des Lichtmischleiterkörpers (2002) mit einer Ecke (2005) der ersten polygonen Form der Lichteingangsseite (2003) verbunden ist, so dass die Längskanten (2006) sich nicht schneiden,
wobei die zwischen zwei benachbarten Längskanten (2006) aufgespannten Sektoroberflächen (2008, 2080, 2081) des Lichtmischleiterkörpers (2002) sich jeweils in einer Erstreckungsebene flächig erstrecken,
wobei die zweite polygone Form im Wesentlichen eine quasi runde Vieleckform oder Grundform aufweist, wobei die quasi runde Vieleckform ein Zwölfeck oder mehr ist,
wobei die erste polygone Form weniger Ecken (2005) aufweist als die zweite polygone Form, und
wobei die Erstreckungsebenen wenigstens eines Teils der Sektoroberflächen (2008, 2080) sich parallel zu der Längsachse (L₂₀₀₀) erstrecken.

2. Lichtmischleiter (2001) nach Anspruch 1, wobei die erste polygone Form im Wesentlichen eine rechteckige oder quadratische Vieleckform oder Grundform aufweist.

3. Lichtmischleiter (2001) nach Anspruch 1 oder 2, wobei die erste und/oder zweite polygone Form zyklisch symmetrisch ist, und/oder wobei die erste und/oder zweite polygone Form ein einfaches und bevorzugt konvexes Polygon ist, und/oder
wobei die erste und/oder zweite polygone Form ein planares Polygon ist, dessen Erstreckungsebene sich bevorzugt senkrecht zur Längsachse (L₂₀₀₀) erstreckt, und/oder
wobei die erste und/oder zweite polygone Form ein gleichseitiges, gleichwinkliges oder regelmäßiges Polygon ist.

4. Lichtmischleiter (2001) nach einem der Ansprüche 1 bis 3, wobei die Erstreckungsebenen wenigstens eines Teils der Sektoroberflächen (2008, 2081) zu der Längsachse (L₂₀₀₀) geneigt sind, vorzugsweise mit zunehmendem Abstand zur Längsachse (L₂₀₀₀) von der Lichteingangsseite (2003) zu der Lichtausgangsseite (2004) hin.

5. Lichtmischleiter (2001) nach einem der Ansprüche 1 bis 4,
wobei der Lichtmischleiter (2001) aus einem Vollkörper bereitgestellt ist, so dass der Lichtmischleiterkörper (2002) durch eine die Längsachse (L₂₀₀₀) umgebende Außenoberfläche (A₂₀₀₀) begrenzt ist.

6. Lichtmischleiter (2001) nach einem der Ansprüche 1 bis 4, wobei der Lichtmischleiter (2001) aus einem Hohlkörper bereitgestellt ist, so dass der Lichtmischleiterkörper (2002) durch eine die Längsachse (L₂₀₀₀) umgebende Innenoberfläche (I₂₀₀₀) sowie eine die Längsachse (L₂₀₀₀) und die Innenoberfläche (I₂₀₀₀) umgebende Außenoberfläche (A₂₀₀₀) begrenzt ist.

7. Lichtmischleiter (2001) nach Anspruch 5 oder 6, wobei die Sektoroberflächen (2008) sich auf der Außenoberfläche (A₂₀₀₀) des Lichtmischleiterkörpers (2002) erstrecken.

8. Lichtmischleiter (2001) nach Anspruch 6 oder Anspruch 6 in Verbindung mit Anspruch 7, wobei die Sektoroberflächen (2008) sich auf der Innenoberfläche (I₂₀₀₀) des Lichtmischleiterkörpers (2002) erstrecken.

9. Lichtmischleiter (2001) nach Anspruch 6 oder Anspruch 6 in Verbindung mit Anspruch 8, wobei die Innenoberfläche (I₂₀₀₀) reflektierend und bevorzugt verspiegelt ausgebildet ist, vorzugsweise mit einem Reflektor oder einer reflektierenden Beschichtung versehen ist.

10. Lichtmischleiter (2001) nach einem der Ansprüche 5 bis 9, wobei die Außenoberfläche (A₂₀₀₀) reflektierend und bevorzugt verspiegelt ausgebildet ist, vorzugsweise mit einem Reflektor oder einer reflektierenden Beschichtung versehen ist.

11. Lichtmischleiter (2001) nach Anspruch 6 oder Anspruch 6 in Verbindung mit einem der Ansprüche 7 bis 10, wobei der als Hohlkörper bereitgestellte Lichtmischleiter (2001) aus einem reflektierenden Material, wie beispielsweise Aluminium, hergestellt ist.

12. Lichtmischleiter (2001) nach einem der Ansprüche 1 bis 10, wobei der Lichtmischleiter (2001) aus einem transparenten Material, wie Glas oder Kunststoff, hergestellt ist.

13. Leuchte aufweisend
einen Lichtmischleiter (2001) gemäß einem der Ansprüche 1 bis 12, und
eine Lichtquelle (2012), wie eine oder mehrere LEDs, zur Lichteinkopplung in den Lichtmischleiter (2001) über dessen Lichteingangsseite (2003), so dass das so eingekoppelte Licht über die Lichtausgangsseite (2004) abgegeben werden kann.

14. Leuchte nach Anspruch 13, ferner aufweisend eine dem Lichtmischleiter (2001) nachgelagerte Voroptik (2013) zur definierten Lichtlenkung des über die Lichtausgangsseite (2004) des Lichtmischleiters (2001) abgegebenen Lichts,
eine der Voroptik (2013) nachgelagerte Auskoppeloptik (2014) zur definierten Lichtabgabe des von der Voroptik (2013) abgegebenen Lichts, und
bevorzugt ferner eine zwischen der Voroptik (2013) sowie der Auskoppeloptik (2014) angeordnete Streuoptik (2015) zur Beeinflussung des von der Voroptik (2013) abgegebenen Lichtes.

## Claims

1. A light mixing guide (2001) having a longitudinal axis (L₂₀₀₀), comprising
a light mixing guide body (2002) which extends axially between a light input side (2003) having a first polygonal shape for coupling light from a light source (2012) into the light mixing guide (2001) and a light output side (2004) having a second polygonal shape for emitting the light coupled in via the light input side (2003),
wherein the first polygonal shape differs from the second polygonal shape, and
wherein each corner (2005) of the first polygonal shape of the light input side (2003) is connected in a rectilinear manner in the form of a longitudinal edge (2006) of the light mixing guide body (2002) to a corner (2007) of the second polygonal shape of the light output side (2004) and, conversely, each corner (2007) of the second polygonal shape of the light output side (2004) is connected in a rectilinear manner in the form of a longitudinal edge (2006) of the light mixing guide body (2002) to a corner (2005) of the first polygonal shape of the light input side (2003), such that the longitudinal edges (2006) do not intersect,
wherein the sector surfaces (2008, 2080, 2081) of the light mixing guide body (2002) subtended between two adjacent longitudinal edges (2006) extend in a planar manner in an extension plane,
wherein the second polygonal shape substantially has a quasi-round polygonal shape or basic shape, wherein the quasi-round polygonal shape is a dodecagon or more,
wherein the first polygonal shape has fewer corners (2005) than the second polygonal shape, and
wherein the extension planes of at least a portion of the sector surfaces (2008, 2080) extend parallel to the longitudinal axis (L₂₀₀₀) .

2. Light mixing guide (2001) according to Claim 1, wherein the first polygonal shape substantially has a rectangular or square polygonal shape or basic shape.

3. Light mixing guide (2001) according to Claim 1 or 2, wherein the first and/or second polygonal shape is cyclically symmetrical, and/or
wherein the first and/or second polygonal shape is a simple and preferably convex polygon, and/or
wherein the first and/or second polygonal shape is a planar polygon the extension plane of which preferably extends perpendicular to the longitudinal axis (L₂₀₀₀), and/or
wherein the first and/or second polygonal shape is an equilateral, equiangular, or regular polygon.

4. Light mixing guide (2001) according to any one of Claims 1 to 3, wherein the extension planes of at least a portion of the sector surfaces (2008, 2081) are inclined toward the longitudinal axis (L₂₀₀₀), preferably with increasing distance to the longitudinal axis (L₂₀₀₀) from the light input side (2003) toward the light output side (2004).

5. Light mixing guide (2001) according to any one of Claims 1 to 4, wherein the light mixing guide (2001) is provided from a solid body, such that the light mixing guide body (2002) is delimited by an outer surface (A₂₀₀₀) surrounding the longitudinal axis (L₂₀₀₀) .

6. Light mixing guide (2001) according to any one of Claims 1 to 4, wherein the light mixing guide (2001) is provided from a hollow body, such that the light mixing guide body (2002) is delimited by an inner surface (I₂₀₀₀) surrounding the longitudinal axis (L₂₀₀₀) and an outer surface (A₂₀₀₀) surrounding the longitudinal axis (L₂₀₀₀) and the inner surface (I₂₀₀₀).

7. Light mixing guide (2001) according to Claim 5 or 6, wherein the sector surfaces (2008) extend on the outer surface (A₂₀₀₀) of the light mixing guide body (2002).

8. Light mixing guide (2001) according to Claim 6 or Claim 6 in conjunction with Claim 7, wherein the sector surfaces (2008) extend on the inner surface (I₂₀₀₀) of the light mixing guide body (2002).

9. Light mixing guide (2001) according to Claim 6 or Claim 6 in conjunction with Claim 8, wherein the inner surface (I₂₀₀₀) is configured to be reflective and preferably mirrored, preferably provided with a reflector or a reflective coating.

10. Light mixing guide (2001) according to any one of Claims 5 to 9, wherein the outer surface (A₂₀₀₀) is configured to be reflective and preferably mirrored, preferably provided with a reflector or a reflective coating.

11. Light mixing guide (2001) according to Claim 6 or Claim 6 in conjunction with any one of Claims 7 to 10, wherein the light mixing guide (2001) provided as a hollow body is made of a reflective material, such as aluminum.

12. Light mixing guide (2001) according to any one of Claims 1 to 10, wherein the light mixing guide (2001) is made of a transparent material, such as glass or plastic.

13. Lamp comprising
a light mixing guide (2001) according to any one of Claims 1 to 12, and a light source (2012), such as one or more LEDs, for coupling light into the light mixing guide (2001) via its light input side (2003), so that the light thus coupled in can be emitted via the light output side (2004).

14. Lamp according to Claim 13, further comprising fore-optics (2013) downstream of the light mixing guide (2001) for defined light guidance of the light emitted via the light output side (2004) of the light mixing guide (2001),
decoupling optics (2014) downstream of the fore-optics (2013) for defined light output of the light emitted by the fore-optics (2013), and
preferably also scattering optics (2015) disposed between the fore-optics (2013) and the decoupling optics (2014) for influencing the light emitted by the fore-optics (2013).

## Revendications

1. Guide de lumière mixte (2001) présentant un axe longitudinal (L₂₀₀₀), comprenant :
un corps de guide de lumière mixte (2002) s'étendant axialement entre un côté d'entrée de lumière (2003) présentant une première forme polygonale et destiné à l'injection, dans le guide de lumière mixte (2001), d'une lumière provenant d'une source lumineuse (2012), et un côté de sortie de lumière (2004) présentant une deuxième forme polygonale et destiné à l'émission de la lumière injectée par ledit côté d'entrée de lumière (2003) ;
ladite première forme polygonale étant différente de ladite deuxième forme polygonale, et
chaque coin (2005) de ladite première forme polygonale du côté d'entrée de lumière (2003) étant relié en ligne droite, sous la forme d'une arête longitudinale (2006) du corps de guide de lumière mixte (2002), à un coin (2007) de la deuxième forme polygonale du côté de sortie de lumière (2004) et inversement, chaque coin (2007) de la deuxième forme polygonale du côté de sortie de lumière (2004) étant relié en ligne droite, sous la forme d'une arête longitudinale (2006) du corps de guide de lumière mixte (2002), à un coin (2005) de la première forme polygonale du côté d'entrée de lumière (2003), de telle manière que les arêtes longitudinales (2006) ne se coupent pas,
les surfaces de secteur (2008, 2080, 2081) dudit corps de guide de lumière mixte (2002) présentes entre deux arêtes longitudinales (2006) voisines s'étendant de manière plane dans un plan d'étendue respectif,
ladite deuxième forme polygonale présentant essentiellement une forme polygonale ou forme de base quasi ronde, ladite forme polygonale quasi ronde étant au moins celle d'un dodécagone,
ladite première forme polygonale présentant moins de coins (2005) que la deuxième forme polygonale, et
les plans d'étendue d'au moins une partie desdites surfaces de secteur (2008, 2080) étant parallèles à l'axe longitudinal (L₂₀₀₀).

2. Guide de lumière mixte (2001) selon la revendication 1, dans lequel la première forme polygonale est essentiellement une forme polygonale ou forme de base rectangulaire ou carrée.

3. Guide de lumière mixte (2001) selon la revendication 1 ou 2, dans lequel la première et/ou deuxième forme polygonale est à symétrie cyclique, et/ou
dans lequel la première et/ou deuxième forme polygonale est un polygone simple et de préférence convexe, et/ou dans lequel la première et/ou deuxième forme polygonale est un polygone plan dont le plan d'étendue est de préférence perpendiculaire à l'axe longitudinal (L₂₀₀₀), et/ou dans lequel la première et/ou deuxième forme polygonale est un polygone équilatéral, équiangle ou régulier.

4. Guide de lumière mixte (2001) selon l'une des revendications 1 à 3, dans lequel les plans d'étendue d'au moins une partie des surfaces de secteur (2008, 2081) sont inclinés par rapport à l'axe longitudinal (L₂₀₀₀), et ce de préférence d'autant plus que l'écart augmente par rapport à l'axe longitudinal (L₂₀₀₀), depuis le côté d'entrée de lumière (2003) jusqu'au côté de sortie de lumière (2004).

5. Guide de lumière mixte (2001) selon l'une des revendications 1 à 4, dans lequel le guide de lumière mixte (2001) est réalisé à partir d'un corps plein, de telle manière que le corps de guide de lumière mixte (2002) est délimité par une surface extérieure (A₂₀₀₀) entourant l'axe longitudinal (L₂₀₀₀) .

6. Guide de lumière mixte (2001) selon l'une des revendications 1 à 4, dans lequel le guide de lumière mixte (2001) est réalisé à partir d'un corps creux, de telle manière que le corps de guide de lumière mixte (2002) est délimité par une surface intérieure (I₂₀₀₀) entourant l'axe longitudinal (L₂₀₀₀) ainsi que par une surface extérieure (A₂₀₀₀) entourant l'axe longitudinal (L₂₀₀₀) et la surface intérieure (I₂₀₀₀) .

7. Guide de lumière mixte (2001) selon la revendication 5 ou 6, dans lequel les surfaces de secteur (2008) s'étendent sur la surface extérieure (A₂₀₀₀) du corps de guide de lumière mixte (2002) .

8. Guide de lumière mixte (2001) selon la revendication 6 ou la revendication 6 en association avec la revendication 7, dans lequel les surfaces de secteur (2008) s'étendent sur la surface intérieure (I₂₀₀₀) du corps de guide de lumière mixte (2002) .

9. Guide de lumière mixte (2001) selon la revendication 6 ou la revendication 6 en association avec la revendication 8, dans lequel la surface intérieure (I₂₀₀₀) est conçue pour être réfléchissante et de préférence miroitante, de préférence pourvue d'un réflecteur ou d'un revêtement réfléchissant.

10. Guide de lumière mixte (2001) selon l'une des revendications 5 à 9, dans lequel la surface extérieure (A₂₀₀₀) est conçue pour être réfléchissante et de préférence miroitante, de préférence pourvue d'un réflecteur ou d'un revêtement réfléchissant.

11. Guide de lumière mixte (2001) selon la revendication 6 ou la revendication 6 en association avec l'une des revendications 7 à 10, dans lequel le guide de lumière mixte (2001) réalisé sous la forme d'un corps creux est produit à partir d'un matériau réfléchissant tel que, par exemple, de l'aluminium.

12. Guide de lumière mixte (2001) selon l'une des revendications 1 à 10, dans lequel le guide de lumière mixte (2001) est produit à partir d'un matériau transparent tel que le verre ou le plastique.

13. Luminaire comprenant :
un guide de lumière mixte (2001) selon l'une des revendications 1 à 12, et une source lumineuse (2012), telle qu'une ou plusieurs LED, permettant une injection de lumière dans le guide de lumière mixte (2001) par son côté d'entrée de lumière (2003), de telle manière que la lumière ainsi injectée puisse être émise par le côté de sortie de lumière (2004) .

14. Luminaire selon la revendication 13, comprenant en outre une pré-optique (2013) située en aval du guide de lumière mixte (2001) et permettant une déviation définie de la lumière émise par le côté de sortie de lumière (2004) du guide de lumière mixte (2001),
une optique de sortie (2014) située en aval de ladite pré-optique (2013) et permettant une sortie définie de la lumière émise par la pré-optique (2013), et
de préférence en outre une optique de diffusion (2015) disposée entre la pré-optique (2013) et l'optique de sortie (2014) et permettant d'influer sur la lumière émise par la pré-optique (2013).
